# FASCICULE DE BREVET EUROPEEN

(11) **EP 2 707 641 B1**
(45) Date de publication et mention de la délivrance du brevet: **15.07.2015**
(21) Numéro de dépôt: 12721500.2
(22) Date de dépôt: 10.05.2012
(51) Int. Cl.: E21B 36/00, E21B 17/01, F16L 1/26, F16L 59/18

(54) **DISPOSITIF ET PROCEDE D'ISOLATION THERMIQUE D'UNE ZONE DE RACCORDEMENT D'EMBOUTS DE CONNEXION DE DEUX CONDUITES SOUS-MARINES CALORIFUGEES.**
VORRICHTUNG UND VERFAHREN ZUR WÄRMEISOLIERUNG EINES BEREICHS EINES ANSCHLUSSES DER ANSCHLUSSENDSTÜCKE ZWEIER UMMANTELTER UNTERWASSERROHRE
DEVICE AND METHOD FOR THERMALLY INSULATING A REGION OF CONNECTION OF CONNECTION END FITTINGS OF TWO LAGGED UNDERWATER PIPES

(30) Priorité: 10.05.2011 FR 1154023
(43) Date de publication de la demande: 19.03.2014
(73) Titulaire: Technip France, 92400 Courbevoix (FR)
(72) Inventeur: MORAND, Henri, Perth 6005 WA (AU); WARD, Philip, 76000 ROUEN (FR)
(74) Mandataire: Blot, Philippe Robert Emile
(86) Numéro de dépôt international: PCT/EP2012/058663
(87) Numéro de publication internationale: WO 2012/152875

(56) Documents cités:
- WO-A2-2008/071637
- US-A- 4 295 669

## Description

La présente invention concerne un dispositif d'isolation thermique d'une zone de raccordement d'embouts de connexion de deux conduites sous-marines calorifugées pour l'exploitation off-shore de gisements d'hydrocarbures, l'une au moins de ces conduites étant une conduite flexible et l'autre conduite pouvant être soit une conduite flexible, soit une conduite rigide ou encore une structure sous-marine assimilable à une conduite rigide.

D'une manière générale, l'invention s'applique notamment à tous les types de conduites flexibles, en particulier, aux conduites de type non lié (« unbonded ») ainsi qu'à celles du type lié (« bonded »). Ces conduites sont décrites dans le document normatif API RP 17B «Recommended Practice for Flexible Pipe » publié par l'American Petroleum Institute.

Lorsque des hydrocarbures sont extraits à partir d'une tête de puits sous-marine, il est nécessaire de les acheminer vers une unité de production située à la surface à l'aide de conduites sous-marines. Pour cela, on distingue généralement les conduites statiques reposant sur le fond marin qui portent le nom « flowline », de celles, souvent dynamiques, assurant la liaison verticale entre le fond marin et la surface et qui portent le nom « riser ».

Lorsqu'ils émergent au niveau de la tête de puits, les hydrocarbures ont généralement une température élevée et sont de ce fait relativement fluides. Par contre, lorsqu'ils circulent ensuite dans les conduites sous-marines, ils ont tendance à se refroidir du fait des pertes thermiques liées à la faible température de l'eau de mer.

Pendant la production, la température des hydrocarbures circulant dans les conduites flexibles est typiquement comprise entre 30°C et 150°C. Lors des arrêts de production, cette température peut provisoirement chuter à -20°C en cas de décompression rapide d'un gaz, avant de remonter pour se stabiliser aux alentours de la température de l'eau de mer qui est de l'ordre de 4 °C à grande profondeur.

Or, lorsque la température chute en deçà d'un seuil dépendant du type d'hydrocarbure, ce dernier fige et il peut alors se former des bouchons solides d'hydrate, de cire ou de paraffine risquant d'obstruer la conduite.

Pour réduire ce risque, il est nécessaire de limiter les pertes thermiques en isolant fortement les conduites, notamment lorsque la tête de puits est située à grande profondeur et à grande distance de l'unité de production.

Afin d'éviter les points froids, il est donc important que les conduites sous-marines soient isolées sur toute leur longueur y compris au niveau des connexions intermédiaires, c'est-à-dire au niveau des embouts de connexion des conduites entre elles.

Les différentes couches d'isolation thermique recouvrant la conduite sont généralement mises en place à terre, lors de la fabrication de cette conduite. Dans le cas d'une conduite flexible, la conduite préalablement calorifugée est ensuite enroulée sur une bobine ou sur un panier embarqué sur un navire d'installation, puis déroulée lors de sa pose en mer.

Lorsque la conduite est formée de plusieurs tronçons, ces tronçons comportent à chaque extrémité un embout de connexion comprenant une bride d'extrémité avant et un capot cylindrique prolongeant cette bride et formant une étanchéité sur la gaine externe de ladite conduite.

La liaison des différents connecteurs entre eux est faite sur le navire d'installation, au fur et à mesure de la pose de la conduite. Pour réduire le temps d'installation et permettre la récupération et la réutilisation des conduites, la liaison intermédiaire entre les brides d'extrémité des deux connecteurs est réalisée au moyen de dispositifs rapides et démontables. Les solutions les plus courantes pour réaliser ces connexions entre les conduites flexibles sont les brides boulonnées ou les connecteurs utilisant un collier de sertissage du type connu par exemple sous la marque « Grayloc® » ou sous la marque « Techlok® ».

Les zones de la conduite au niveau des brides d'extrémité des embouts de connexion et des organes de liaison entre ces brides doivent être également isolées thermiquement après leur montage sur le navire et avant l'immersion de la conduite, afin d'assurer une continuité de l'isolation thermique.

Une des techniques couramment utilisées consiste à recouvrir les deux embouts de connexion ainsi que les organes de liaison, d'un caisson isolant constitué de deux demi-coquilles assemblées par cerclage. Ces caissons sont fabriqués sur mesure en fonction de la géométrie des embouts et des organes de liaison et ils sont le plus souvent réalisés en polyuréthane injecté à l'intérieur d'un moule.

Les caissons ont pour inconvénient d'être volumineux car ils recouvrent totalement les deux embouts de connexion et sont donc difficiles à manipuler et à mettre en place, surtout sur un navire dont le pont est généralement encombré.

En pratique, il faut au minimum deux à cinq heures pour les installer et pendant ce temps le navire de pose est inutilement immobilisé.

De plus, le volume important du caisson a aussi pour effet défavorable de faciliter les phénomènes de convexion thermique dans l'eau de mer présente à l'intérieur. En effet, il existe un jeu radial important, de l'ordre de 40mm entre le capot de l'embout et l'intérieur du caisson, ce jeu étant rempli d'eau de mer. Cette convexion facilitant les échanges thermiques et donc les pertes thermiques, il est nécessaire pour la compenser d'augmenter l'épaisseur de la paroi d'isolation du caisson.

Un autre inconvénient avec ce type de matériel réside dans la difficulté à protéger contre la corrosion les composants métalliques en contact avec l'eau de mer présente à l'intérieur du caisson, et notamment le capot de chaque embout de connexion. Les phénomènes de corrosion sont nettement accélérés lorsque la température de l'eau atteint 100 à 120°C comme cela peut parfois être le cas. Les systèmes usuels de protection cathodique utilisant une anode sacrificielle ne sont, dans la plupart des cas, pas efficaces, car d'une part l'anode est située à l'extérieur du caisson et, d'autre part, l'extrémité du caisson est montée de façon quasi-étanche avec la conduite ou avec l'extrémité de l'embout.

La protection cathodique étant pratiquement inopérante à l'intérieur du caisson, il est dans ce cas nécessaire de réaliser le capot de chaque embout avec un alliage très résistant à la corrosion ou bien avec un acier revêtu en surface d'un tel alliage, ce qui augmente, significativement le coût de chaque embout de connexion.

Un autre inconvénient associé aux températures élevées est lié aux limitations mécaniques et thermiques des matériaux constituant le caisson de protection. En effet, le polyuréthane présente l'avantage d'être relativement facile à mouler et d'avoir de bonnes propriétés thermiques. Cependant, ses propriétés mécaniques chutent fortement lorsque la température dépasse 80°C, le matériau se ramollissant alors nettement ce qui affecte la tenue mécanique du caisson.

Pour éviter ce phénomène, il est connu une solution consistant à revêtir l'intérieur du caisson avec un autre polymère nettement plus résistant à la température, cette solution étant cependant très coûteuse.

WO 2008/071637 concerne un flexible cryogénique aérien destiné à transporter du gaz naturel liquéfié. US 4 295 669 concerne une conduite rigide de transport d'hydrocarbures utilisée dans une raffinerie. Ces conduites ne sont pas immergées.

L'invention a pour but d'éviter ces inconvénients en proposant un dispositif d'isolation thermique performant techniquement, rapide à mettre en place et facilement démontable.

L'invention a donc pour objet un dispositif d'isolation selon la revendication 1.

Le dispositif d'isolation selon l'invention peut comprendre une ou plusieurs des caractéristiques des revendications 2 à 13.

L'invention a également pour objet un procédé selon la revendication 14.

La présente invention a également pour objet l'utilisation d'un dispositif tel que défini plus haut pour l'isolation thermique d'une zone de raccordement d'embouts de connexion de deux conduites sous-marines calorifugées pour l'exploitation offshore de gisements d'hydrocarbures, dont au moins une est une conduite flexible.

L'utilisation précitée peut comprendre une étape revendiquée dans la revendication 15. Elle peut comprendre les caractéristiques suivantes :
- l'utilisation comprend la circulation d'un hydrocarbure dans la conduite flexible à une température comprise entre -20°C et 150°C, avantageusement entre 0°C et 150°C.
- l'utilisation comporte l'immobilisation, dans la conduite, d'un hydrocarbure à une température comprise entre -20°C et 10°C.

L'invention sera mieux comprise à la lecture de la description qui va suivre, donnée uniquement à titre d'exemple et faite en se référant aux dessins annexés, sur lesquels :
- la Fig. 1 est une vue schématique partiellement en coupe longitudinale d'une zone de raccordement de deux embouts de connexion de deux conduites sous-marines et équipées d'un dispositif d'isolation thermique, conforme à l'invention,
- la Fig. 2 est une vue analogue à la Fig. 1 d'une première variante du dispositif d'isolation thermique, conforme à l'invention,
- la Fig. 3 est une vue analogue à la Fig. 1 d'une seconde variante du dispositif d'isolation thermique, conforme à l'invention,
- la Fig. 4 est une vue schématique en perspective d'un premier mode de réalisation d'un couvercle amovible de protection de la zone de raccordement entre les deux embouts de connexion,
- les Figs. 5, 6 et 7 sont des vues schématiques en coupe transversale d'un couvercle amovible de protection thermique montrant différentes variantes de la portion de raccordement des deux demi-coquilles formant ce couvercle amovible,
- la Fig. 8 est une vue schématique en perspective d'un autre mode de réalisation du couvercle amovible de protection thermique, et
- la Fig. 9 est une vue schématique en perspective d'un exemple d'une soupape équipant un canal de drainage du dispositif d'isolation thermique, conforme à l'invention.

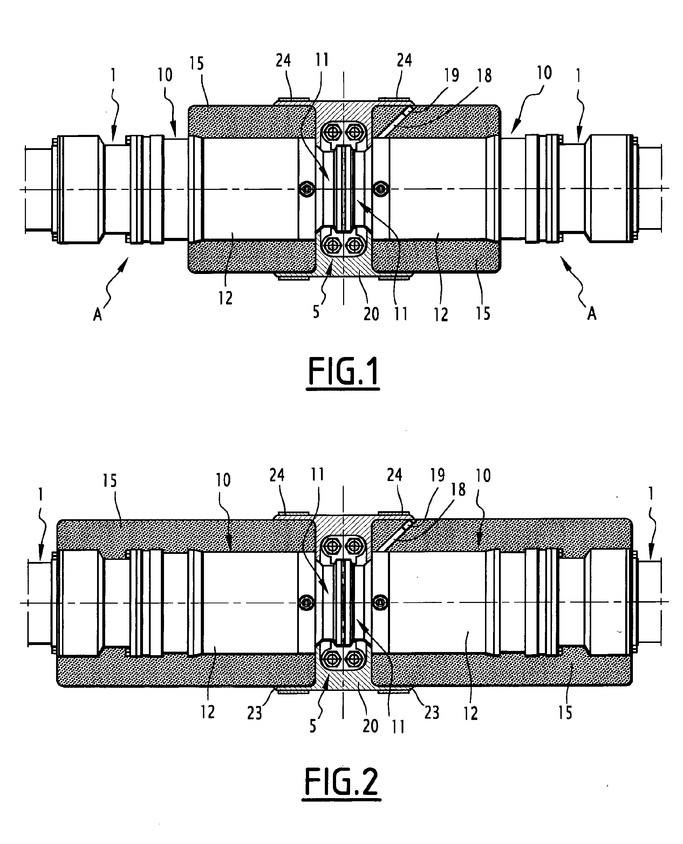

Sur les Figs. 1 à 3, on a représenté un ensemble de raccordement entre deux conduites sous-marines 1 calorifugées pour l'exploitation off-shore de gisements d'hydrocarbures, au moins une de ces conduites 1 étant une conduite sous-marine flexible.

Selon différentes possibilités, les deux conduites 1 sont des conduites flexibles ou une première conduite est une conduite flexible et une seconde conduite est une conduite rigide ou une première conduite est une conduite flexible et une seconde conduite est constituée par un équipement sous-marin, du type manifold, tête de puits ou pompe, comportant un tronçon rigide de courte longueur auquel est connectée la première conduite flexible.

La conduite flexible est du type non lié (« unbonded ») ou du type lié (« bonded »).

Ces conduites sont décrites dans le document normatif API RP 17B « Recommanded Practice for Flexible Pipe » publié par l'American Petroleum Institute.

Dans la description qui suit, le terme « avant » signifie au plus près de l'extrémité libre de la conduite 1.

Ainsi que montré sur les Figs. 1 à 3, l'extrémité libre de chaque conduite 1 est pourvue d'un embout de connexion désigné par la référence générale 10 destiné à assurer le raccordement des conduites entre elles ou avec des équipements terminaux et ces embouts doivent être réalisés dans des conditions assurant à la fois une bonne solidarisation et une bonne étanchéité.

Sur ces Figs 1 à 3, les embouts de connexion 10 équipant chaque conduite 1 sont identiques et désignés par les mêmes références.

De manière classique, chaque embout de connexion 10 comporte une bride d'extrémité avant 11 destinée à la fixation sur un autre embout de connexion 10 ou à des équipements terminaux.

L'embout de connexion 10 comporte également un capot cylindrique 12 prolongeant cette bride 11 et formant une étanchéité sur la gaine externe de la conduite 1 correspondante.

Le raccordement des brides d'extrémité 11 des deux conduites 1 est réalisé par des organes de liaison 5 constitués par exemple par des boulons ou par un collier de serrage, par exemple commercialisé sous la marque «Grayloc®» ou «Techlok® ».

Le dispositif d'isolation thermique de la zone de raccordement des embouts de connexion 10 comprend pour chaque embout de connexion 10, une gaine d'isolation thermique 15 recouvrant au moins une portion de la longueur de chaque embout 10, adjacente à la bride d'extrémité 11.

Comme montré sur les Figs. 1 à 3, la gaine 15 de chaque embout de connexion 10 ne recouvre pas la bride d'extrémité 11.

Selon un premier mode de réalisation représenté à la Fig. 1, chaque gaine d'isolation thermique 15 ne recouvre que la partie avant de l'embout de connexion 10 en laissant découverte la bride d'extrémité 11 de l'embout 10 correspondant.

Selon un deuxième mode de réalisation représenté à la Fig. 2, la gaine de protection thermique 15 s'étend sur toute la longueur de l'embout de connexion 10 en laissant libre la bride d'extrémité 11 de l'embout correspondant.

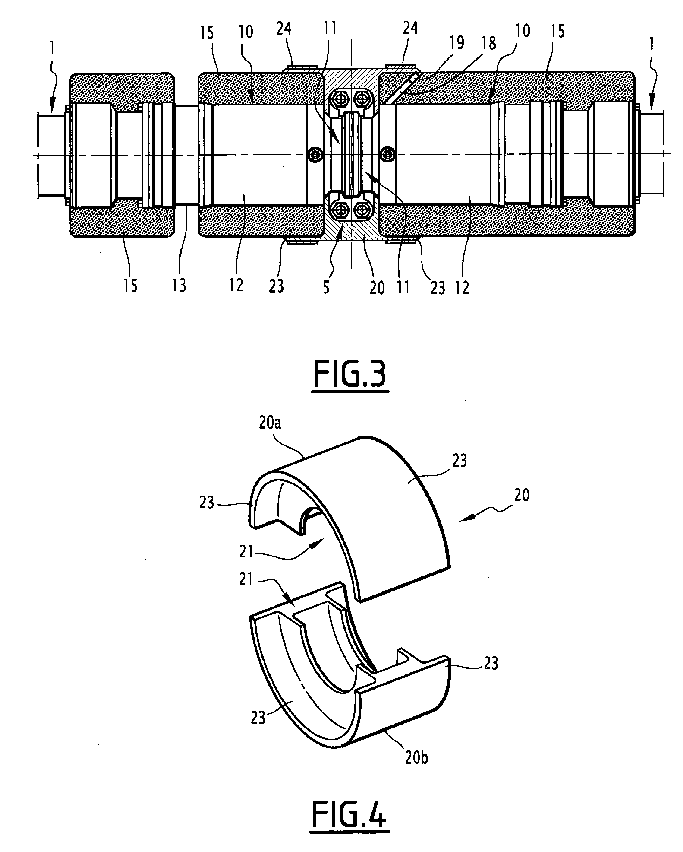

Selon un troisième mode de réalisation représenté à la Fig. 3, la bride d'isolation thermique 15 s'étend par exemple pour un embout de connexion 10 sur toute la longueur de cet embout 10 en laissant découverte, d'une part, la bride d'extrémité 11 et, d'autre part, une gorge 13 ménagée sur le capot cylindrique 12 dudit embout, cette gorge 13 étant destinée à fixer solidement des équipements externes, comme par exemple un raidisseur, un limiteur de courbure ou un système d'accrochage à une plate-forme ou au navire de pose.

La gaine d'isolation thermique 15 pour l'autre embout de connexion 10 s'étend par exemple sur toute la longueur de ce dernier.

D'une manière générale, la gaine d'isolation thermique 15 est posée sur l'embout de connexion 10 lors de la fabrication de la conduite 1 avant le transfert de cette conduite 1 sur le navire de pose.

La pose préalable de la gaine d'isolation thermique 15 facilite la manutention sur le navire et permet d'obtenir un gain de temps pendant l'installation en service de la conduite.

La gaine d'isolation thermique 15 est collée sur l'embout de connexion 10 correspondant. Cette adhérence offre plusieurs avantages:
- une meilleure isolation thermique pour une épaisseur égale d'isolant, du fait de la suppression des effets de convexion à l'interface entre l'isolant et le capot 12 de l'embout de connexion 10. Dans les dispositifs de protection utilisés jusqu'à présent, le jeu radial entre l'extérieur de l'embout 10 et l'intérieur du capot d'isolation thermique peut atteindre 40mm, ces 40mm remplis d'eau de mer étant le siège de phénomènes de convexion qui favorisent les pertes thermiques et le refroidissement de l'embout de connexion 10. En supprimant ce jeu, on peut réduire le diamètre extérieur de l'ensemble, tout en améliorant l'isolation thermique ce qui, à performances thermiques égales permet de réduire l'épaisseur d'isolant d'à peu près 20 mm.
- Une possibilité de réaliser cette isolation avec des matériaux présentant des propriétés mécaniques inférieures à celles des matériaux utilisés jusqu'à présent. Les exigences en matière de flexibilité et de résistance au fluage à chaud sont nettement inférieures à celles de la solution précédemment utilisée puisque le matériau est solidement supporté par l'embout de connexion 10. Cette moindre exigence en matière mécanique permet d'utiliser des matériaux plus performants thermiquement et/ou moins onéreux.
- Un encombrement réduit.
- Une protection contre la corrosion du capot 12 de l'embout de connexion 10. La couche d'isolation adhérente empêche l'eau de mer d'entrer en contact avec le capot métallique 12 de l'embout 10, et protège donc ce dernier contre la corrosion sans qu'il soit nécessaire de mettre en place une protection cathodique ou un coûteux traitement de surface.

Selon une première variante, la gaine d'isolation thermique 15 est avantageusement réalisée par moulage d'un matériau isolant autour du capot 12 de l'embout 10, ledit matériau isolant étant à l'état liquide au moment du moulage et se solidifiant ensuite via un effet thermique (refroidissement) ou chimique (réaction avec un durcisseur ajouté juste avant le moulage). Si le moule est constitué d'un matériau présentant une faible conductivité thermique, par exemple en polyéthylène, il peut être laissé en place après solidification du matériau isolant. Dans le cas contraire, notamment lorsque le moule est métallique, ce dernier doit être retiré après solidification du matériau isolant. Afin de garantir une bonne adhérence entre la gaine d'isolation thermique 15 et le capot 12 de l'embout 10, le capot 12 doit être soigneusement dégraissé et nettoyé avant l'opération de moulage. Pour augmenter l'adhérence, on peut aussi revêtir préalablement le capot 12 avec une colle ou un primaire d'accrochage.

Le matériau isolant moulé peut être un polymère homogène, ou une mousse de polymère c'est-à-dire un polymère comportant de nombreuses cavités internes remplies d'air, de gaz ou de vide, ou encore une mousse syntactique à matrice polymérique, c'est-à-dire un matériau polymérique mélangé avec des sphères creuses isolantes en céramique, en verre ou en matériau plastique. Le matériau isolant moulé peut notamment comporter du polyuréthane, du polypropylène, du polyéthylène, du polycarbonate, du polystyrène, du polychlorure de vinyle, un polymère polysulfuré ou encore une résine à base d'epoxy. Le matériau isolant moulé est avantageusement réalisé en mousse de polyuréthane, ou en mousse de polypropylène, ou en mousse syntactique à base polyuréthane, ou en mousse syntactique à base de polypropylène. Selon un autre mode avantageux, le matériau isolant moulé est une mousse syntactique à base d'un polymère thermodurcissable, par exemple à base d'époxy.

Selon une deuxième variante, la gaine d'isolation thermique 15 est formée de deux demi coquilles ajustées et collées autour du capot 12 de l'embout de connexion 10.

Selon une troisième variante, la gaine d'isolation thermique 15 est réalisée par enroulement autour du capot 12 de l'embout de connexion 10 d'une ou plusieurs bandes de matériau isolant, lesdites bandes étant de surcroît collées contre ledit capot 12. Avantageusement, ces bandes sont disposées en plusieurs couches superposées et collées entre elles de façon à garantir l'étanchéité vis-à-vis de l'eau. Ce collage peut être fait à l'aide d'une colle ou d'une résine ou encore par chauffage et fusion partielle des bandes préalablement enroulées.

Plus généralement, la gaine d'isolation thermique 15 peut être réalisée selon n'importe quelle technique connue d'isolation des pipelines rigides sous-marins.

Ainsi que montré sur les Figs. 1 à 3, après raccordement des brides d'extrémité 11 des deux embouts de connexion 10, l'espace ménagé entre les deux gaines d'isolation thermique 15 est recouvert par un couvercle amovible 20 de protection thermique. Le couvercle amovible 20 peut être réalisé avec des matériaux polymériques similaires à ceux utilisés pour la gaine d'isolation thermique 15, et notamment avec des mousses syntactiques à base de polyuréthane ou de polypropylène.

Selon un premier mode de réalisation représenté à la Fig. 4, le couvercle amovible 20 est constitué de deux demi-coquilles 20a et 20b comportant chacune, sur sa face interne, un profil 21 complémentaire aux organes de liaison 5 pour enrober et isoler thermiquement lesdits organes de liaison 5.

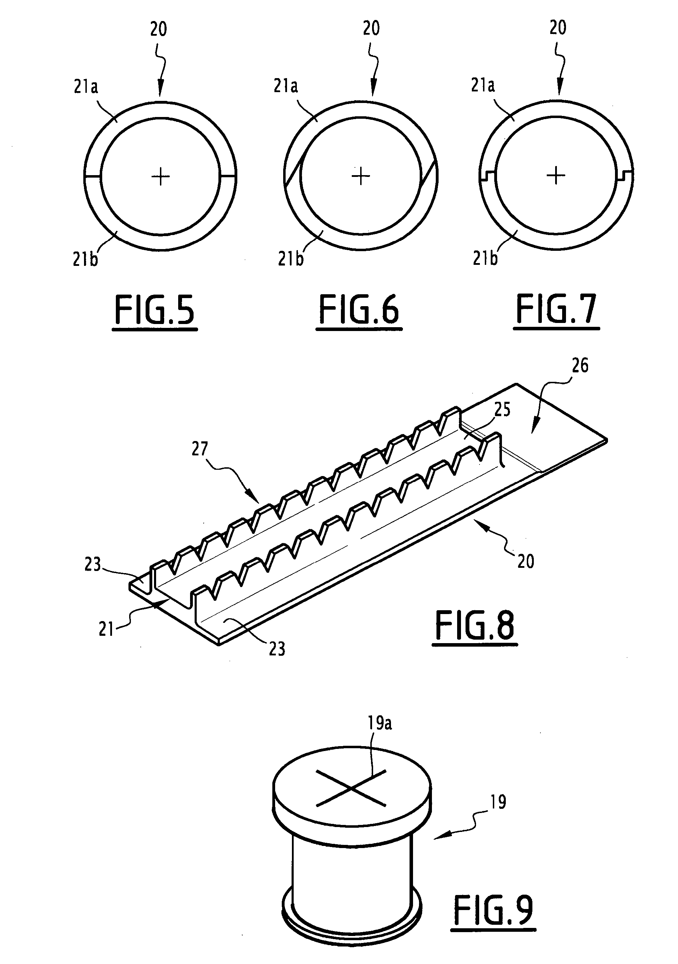

Selon un autre mode de réalisation représenté à la Fig. 8, le couvercle amovible 20 est réalisé par un enroulement d'une spire 25 d'un profil souple, laquelle est mise à longueur pour couvrir 360°. Cette spire souple 25 présente également sur sa face interne, un profil 21 complémentaire aux organes de liaison 5 pour enrober et isoler lesdits organes de liaison 5.

En outre, la spire 25 présente avantageusement sur sa face interne une géométrie en forme de dents de scie 27, qui a pour effet de diminuer la raideur en flexion du profil souple, et par suite de faciliter l'enroulement de ce dernier, notamment lorsque ce dernier présente une forte épaisseur et doit être enroulé à un faible rayon de courbure.

Pour limiter les pertes thermiques au niveau des jonctions entre les deux demi-coquilles 21 a et 21b ou entre les deux extrémités de la spire 25 du couvercle amovible 20, ces zones de jonction sont ajustées précisément, comme montré à la Fig. 5, ou présentent un profil transversal complémentaire, par exemple en forme de biseau, comme montré à la Fig. 6 ou en forme de tenon et mortaise, comme montré à la Fig. 7. Afin d'améliorer l'étanchéité, la ou les zones de jonctions peuvent aussi être recouvertes d'une languette du type de la languette d'extrémité 26 représentée sur la Fig. 8.

Enfin, le couvercle amovible 20 comporte sur chacun de ses bords latéraux, une languette annulaire 23 de recouvrement d'une bande de la gaine d'isolation thermique 15 adjacente, ainsi que montré sur les Figs. 1 à 3. Chaque languette annulaire 23 est fixée sur la gaine d'isolation thermique 15 par exemple par un collier de serrage 24 ou tout autre moyen approprié.

Comme cela apparaît sur les Figs.1 à 3, la gaine d'isolation thermique 15 d'au moins un embout de connexion 10 comporte un canal de drainage 18 équipé d'une soupape 19. Ce canal de drainage 18 comporte une première extrémité débouchant à l'extérieur de la gaine 15 et une seconde extrémité débouchant à l'intérieur de cette gaine 15 au niveau de la bride d'extrémité 11 dudit embout 10.

Comme montré à la Fig. 9, la soupape 19 consiste en un capuchon par exemple en matière plastique dans lequel la face obstruant le canal 18 a été découpée de préférence selon une croix 19a. De la sorte, lorsque la conduite 1 est immergée, et que l'eau de mer cherche à pénétrer dans la zone située sous le couvercle amovible 20, la face découpée par la croix 19a tend à s'ouvrir pour laisser passer l'eau jusqu'à ce que les pressions s'équilibrent.

Ensuite la face découpée par la croix 19a se referme et retrouve sa planéité initiale.

Selon un autre mode de réalisation non représenté, le canal de drainage équipé d'une soupape traverse radialement le couvercle amovible 20 au lieu de la gaine d'isolation thermique 15.

La zone située sous le couvercle amovible 20 présente un volume faible, très inférieur à celui du capot des solutions antérieures utilisées jusqu'à présent. Du fait de ce faible volume, du fort confinement des pièces métalliques, et du caractère stagnant de l'eau de mer située dans cette zone, les phénomènes de corrosion sont réduits car l'oxygène présent dans l'eau est rapidement consommé par le début de la réaction de corrosion, puis n'est pas renouvelé ce qui ralentit ensuite ce phénomène de corrosion. La protection cathodique ne fonctionnant pas dans cette zone, les organes de liaison 5 peuvent être protégés par un revêtement de surface adapté. Cette contrainte est moindre que dans les solutions utilisées jusqu'à présent, puisque les surfaces à protéger sont moins étendues.

La zone A qui n'est pas isolée thermiquement par l'extérieur, comme représenté à la Fig. 1, est isolée partiellement par l'intérieur par la gaine de pression de la conduite dans le cas d'une conduite flexible qui se prolonge dans l'embout de connexion 10.

Dans le cas où la gorge 13 représentée à la Fig.3 est uniquement utilisée pendant l'installation pour fixer provisoirement un dispositif d'accrochage au navire de pose, il peut être avantageux, une fois terminée la phase d'accrochage via la gorge 13, de recouvrir cette dernière avec un second couvercle amovible, non représenté, ledit deuxième couvercle amovible présentant une structure similaire à celle du couvercle amovible 20. Ce second couvercle optionnel a pour effet de réduire les pertes thermiques au niveau de la gorge 13.

L'isolation thermique de la zone de raccordement des embouts de connexion 10 des deux conduites 1 sous-marines calorifugées dont au moins une est une conduite flexible, est réalisée de la façon suivante.

Tout d'abord, au moment de la fabrication de la conduite flexible 1, et avant le raccordement des deux conduites 1 entre elles par les organes de liaison 5, on recouvre de la gaine d'isolation thermique 15, au moins une portion de la longueur de chaque embout 10, adjacente à la bride d'extrémité 11, en laissant ladite bride d'extrémité 11 découverte. La conduite 1 est ensuite enroulée sur une bobine ou sur un panier embarqué sur un navire d'installation, puis déroulée lors de son installation en mer.

La conduite étant constituée de plusieurs tronçons, le raccordement de ces tronçons de conduite est réalisé en plaçant les brides d'extrémité 11 des deux embouts de connexion 10 préalablement isolés l'une contre l'autre, ces brides de connexion 11 n'étant pas recouverte de la gaine d'isolation thermique 15.

Ensuite on fixe les brides d'extrémité 11 ensembles par les organes de liaison 5 appropriés et on recouvre l'espace ménagé entre les deux gaines d'isolation thermique 15 par le couvercle amovible 20 de protection thermique. Ce couvercle amovible 20 est fixé sur chaque gaine d'isolation thermique 15 par le collier 24.

L'isolation thermique ainsi réalisée est à la fois performante techniquement, rapide à mettre en place et facilement démontable.

Le dispositif selon l'invention peut donc être utilisé pour isoler thermiquement une zone de raccordement d'embouts de connexion de conduites sous-marines calorifugées pour l'exploitation offshore de gisements d'hydrocarbures, dont au moins une est une conduite flexible. La zone de raccordement, munie du dispositif d'isolation est alors totalement immergée dans l'étendue d'eau.

Lors de la production, la température des hydrocarbures circulant dans les conduites est typiquement comprise entre 30°C et 150°C.

Lors d'un arrêt de production, cette température peut provisoirement chuter à -20°C en cas de décompression rapide d'un gaz, avant de remonter pour se stabiliser aux alentours de la température de l'eau de mer. Cette température est généralement entre 0°C et 10°C, et est notamment de l'ordre de 4°C à grande profondeur.

## Revendications

1. Dispositif d'isolation thermique d'une zone de raccordement d'embouts de connexion (10) de deux conduites sous-marines (1) calorifugées pour l'exploitation off-shore de gisements d'hydrocarbures, dont au moins une est une conduite flexible, chaque embout de connexion (10) comportant une bride d'extrémité (11) avant et un capot (12) cylindrique prolongeant cette bride (11), lesdites brides (11) des embouts de connexion (10) étant aptes à être reliées entre elles par des organes de liaison (5), **caractérisé en ce qu'**il comporte une gaine d'isolation thermique (15) recouvrant au moins une portion de la longueur de chaque embout (10), adjacente à la bride d'extrémité (11), en laissant ladite bride d'extrémité (11) découverte et un couvercle amovible (20) de protection thermique recouvrant l'espace ménagé entre les deux gaines d'isolation thermique (15) après raccordement des brides d'extrémité (11) des deux embouts (10) par lesdits organes de liaison (5), ledit couvercle amovible (20) étant fixé sur chaque gaine d'isolation thermique (15).

2. Dispositif suivant la revendication 1, **caractérisé en ce que** la gaine d'isolation thermique (15) s'étend sur toute la longueur de l'embout (10) correspondant en laissant découverte la bride d'extrémité (11) dudit embout (10).

3. Dispositif suivant la revendication 1, **caractérisé en ce que** la gaine d'isolation thermique (15) s'étend sur toute la longueur de l'embout (10) correspondant en laissant découverte, d'une part, la bride d'extrémité (11) dudit embout (10) et, d'autre part, une gorge (13) ménagée sur le capot cylindrique (12) dudit embout (10).

4. Dispositif selon l'une quelconque des revendications 1 à 3, **caractérisé en ce que** la gaine d'isolation thermique (15) est collée sur l'embout de connexion (10) correspondant.

5. Dispositif selon l'une quelconque des revendications 1 à 4, **caractérisé en ce que** la gaine d'isolation thermique (15) est formée de deux demi-coquilles.

6. Dispositif selon l'une quelconque des revendications 1 à 3, **caractérisé en ce que** la gaine d'isolation thermique (15) est formée par moulage d'une mousse de polyuréthane ou d'une mousse syntactique.

7. Dispositif selon l'une quelconque des revendications 1 à 6, **caractérisé en ce que** le couvercle amovible (20) comporte sur sa face interne, un profil (21) complémentaire aux organes de liaison (5) pour enrober lesdits organes de liaison (5).

8. Dispositif selon l'une quelconque des revendications 1 à 7, **caractérisé en ce que** le couvercle amovible (20) est formé de deux demi-coquilles (20a, 20b) rigides.

9. Dispositif selon la revendication 8, **caractérisé en ce que** la zone de jonction des deux demi-coquilles (20a, 20b) entre elles présente un profil transversal complémentaire, par exemple en forme de biseau ou de tenon et mortaise.

10. Dispositif selon l'une quelconque des revendications 1 à 7, **caractérisé en ce que** le couvercle amovible (20) est formé par une spire (25) en matériau souple enroulée sur les brides de l'extrémité (11) des deux embouts (10) et sur les organes de liaison (5).

11. Dispositif selon l'une quelconque des revendications 7 à 10, **caractérisé en ce que** le couvercle amovible (20) comporte, sur chacun de ses bords latéraux une languette annulaire (23) de recouvrement d'une bande de la gaine d'isolation thermique (15) adjacente.

12. Dispositif selon la revendication 11, **caractérisé en ce que** chaque languette annulaire (23) est fixée sur la gaine d'isolation thermique (15) par un collier de serrage (24).

13. Dispositif selon l'une quelconque des revendications 1 à 12, **caractérisé en ce que** la gaine d'isolation thermique (15) d'au moins un embout de connexion (10) comporte un canal de drainage (18) équipé d'une soupape (19) et comprenant une première extrémité débouchant à l'extérieur de la gaine (15) et une seconde extrémité débouchant à l'intérieur de cette gaine (15) au niveau de la bride d'extrémité (11) dudit embout de connexion (10).

14. Procédé de pose d'un dispositif selon l'une quelconque des revendications précédentes pour l'isolation thermique d'une zone de raccordement d'embouts de connexion (10) de deux conduites (10) sous-marines calorifugées, dont au moins une est une conduite flexible, **caractérisé en ce qu'**il consiste en les étapes suivantes :
a) après le montage de l'embout de connexion (10) sur la conduite (1) et avant le raccordement des deux conduites (1) entre elles, on recouvre de la gaine d'isolation thermique (15) au moins une portion de la longueur de chaque embout (10), adjacente à la bride d'extrémité (11) en laissant ladite bride (11) découverte,
b) on place les brides d'extrémité (11) des deux embouts de connexion (10) l'une contre l'autre,
c) on fixe lesdites brides d'extrémité (11) ensembles par les organes de liaison (5),
d) après le raccordement des brides d'extrémité (11) des deux conduites, on recouvre l'espace ménagé entre les deux gaines d'isolation thermique (15) par un couvercle amovible (20) de protection thermique, et
e) on relie le couvercle amovible (20) avec les deux gaines d'isolation thermique (15).

15. Procédé selon la revendication 14, **caractérisé en ce qu'**il comporte, après l'étape e), l'immersion totale de la zone de raccordement dans de l'eau, notamment dans de l'eau de mer.

## Patentansprüche

1. Vorrichtung zur Wärmeisolierung eines Anschlussbereichs von Anschlussendstücken (10) von zwei wärmegedämmten Unterwasserleitungen (1) zur Offshore-Förderung von Kohlenwasserstoff-Vorkommen, von denen zumindest eine eine flexible Leitung ist, wobei jedes Anschlussendstück (10) einen vorderen Endflansch (11) und eine zylindrische Kappe (12) aufweist, welche diesen Flansch (11) verlängert, wobei die Flansche (11) der Anschlussendstücke (10) dazu ausgelegt sind, über Verbindungsorgane (5) miteinander verbunden zu werden,
**dadurch gekennzeichnet,**
**dass** sie eine wärmeisolierende Umhüllung (15) aufweist, die zumindest einen an den Endflansch (11) angrenzenden Bereich der Länge eines jeden Endstücks (10) bedeckt, wobei der Endflansch (11) unbedeckt bleibt, sowie eine abnehmbare Abdeckung (20) zum Wärmeschutz aufweist, welche nach dem Verbinden der Endflansche (11) der beiden Endstücke (10) über die Verbindungsorgane (5) den zwischen den beiden wärmeisolierenden Umhüllungen (15) freigelassenen Raum bedeckt, wobei die abnehmbare Abdeckung (20) an jeder wärmeisolierenden Umhüllung (15) befestigt ist.

2. Vorrichtung nach Anspruch 1,
**dadurch gekennzeichnet,**
**dass** die wärmeisolierende Umhüllung (15) sich über die gesamte Länge des entsprechenden Endstücks (10) erstreckt und dabei den Endflansch (11) des Endstücks (10) unbedeckt lässt.

3. Vorrichtung nach Anspruch 1,
**dadurch gekennzeichnet,**
**dass** die wärmeisolierende Umhüllung (15) sich über die gesamte Länge des entsprechenden Endstücks (10) erstreckt und dabei einerseits den Endflansch (11) des Endstücks (10) und andererseits eine Nut (13) unbedeckt lässt, die in die zylindrische Kappe (12) des Endstücks (10) eingearbeitet ist.

4. Vorrichtung nach einem der Ansprüche 1 bis 3,
**dadurch gekennzeichnet,**
**dass** die wärmeisolierende Umhüllung (15) mit dem entsprechenden Endstück (10) verklebt ist.

5. Vorrichtung nach einem der Ansprüche 1 bis 4,
**dadurch gekennzeichnet,**
**dass** die wärmeisolierende Umhüllung (15) aus zwei Halbschalen gebildet ist.

6. Vorrichtung nach einem der Ansprüche 1 bis 3,
**dadurch gekennzeichnet,**
**dass** die wärmeisolierende Umhüllung (15) durch Formen eines Polyurethan-Schaums oder eines syntaktischen Schaums gebildet ist.

7. Vorrichtung nach einem der Ansprüche 1 bis 6,
**dadurch gekennzeichnet,**
**dass** die abnehmbare Abdeckung (20) an ihrer Innenseite ein zu den Verbindungsorganen (5) komplementär ausgebildetes Profil (21) aufweist, um die Verbindungsorgane (5) zu umhüllen.

8. Vorrichtung nach einem der Ansprüche 1 bis 7,
**dadurch gekennzeichnet,**
**dass** die abnehmbare Abdeckung (20) aus zwei steifen Halbschalen (20a, 20b) gebildet ist.

9. Vorrichtung nach Anspruch 8,
**dadurch gekennzeichnet,**
**dass** der Verbindungsbereich der beiden Halbschalen (20a, 20b) miteinander ein komplementär ausgebildetes Querprofil aufweist, beispielsweise in Keilform oder in Form von Nut und Feder.

10. Vorrichtung nach einem der Ansprüche 1 bis 7,
**dadurch gekennzeichnet,**
**dass** die abnehmbare Abdeckung (20) aus einer Windung (25) aus flexiblem Material gebildet ist, die um die Endflansche (11) der beiden Endstücke (10) und die Verbindungsorgane (5) herumgewickelt ist.

11. Vorrichtung nach einem der Ansprüche 7 bis 10,
**dadurch gekennzeichnet,**
**dass** die abnehmbare Abdeckung (20) an jedem ihrer Seitenränder eine ringförmige Zunge (23) zum Bedecken eines Streifens der angrenzenden wärmeisolierenden Umhüllung (15) aufweist.

12. Vorrichtung nach Anspruch 11,
**dadurch gekennzeichnet,**
**dass** jede ringförmige Zunge (23) mit einer Klemmschelle (24) an der wärmeisolierenden Umhüllung (15) befestigt ist.

13. Vorrichtung nach einem der Ansprüche 1 bis 12,
**dadurch gekennzeichnet,**
**dass** die wärmeisolierende Umhüllung (15) von zumindest einem Anschlussendstück (10) einen Drainagekanal (18) aufweist, der mit einem Ventil (19) ausgestattet ist und der ein erstes Ende, das außerhalb der Umhüllung (15) endet, sowie ein zweites Ende aufweist, das innerhalb dieser Umhüllung (15) im Bereich des Endflansches (11) des Anschlussendstücks (10) endet.

14. Verfahren zum Verlegen einer Vorrichtung nach einem der vorangehenden Ansprüche zur Wärmeisolierung eines Anschlussbereichs von Anschlussendstücken (10) von zweier wärmegedämmten Unterwasserleitungen (10), von denen zumindest eine eine flexible Leitung ist,
**dadurch gekennzeichnet,**
**dass** es aus den folgenden Schritten besteht:
a) nach der Montage des Anschlussendstücks (10) an der Leitung (1) und vor dem Verbinden der beiden Leitungen (1) miteinander wird von der wärmeisolierenden Umhüllung (15) zumindest ein an den Endflansch (11) angrenzender Teil der Länge eines jeden Endstücks (10) bedeckt, wobei der Endflansch (11) unbedeckt bleibt,
b) die Endflansche (11) der beiden Anschlussendstücke (10) werden aneinandergesetzt,
c) die Endflansche (11) werden mit den Verbindungsorganen (5) aneinander befestigt,
d) nach dem Verbinden der Endflansche (11) der beiden Leitungen wird der zwischen den beiden wärmeisolierenden Umhüllungen (15) freigelassene Raum mit einer abnehmbaren Abdeckung (20) zum Wärmeschutz bedeckt,
und
e) die abnehmbare Abdeckung (20) wird mit den beiden wärmeisolierenden Umhüllungen (15) verbunden.

15. Verfahren nach Anspruch 14,
**dadurch gekennzeichnet,**
**dass** es nach dem Schritt e) das vollständige Eintauchen des Anschlussbereichs in Wasser, insbesondere in Meereswasser, umfasst.

## Claims

1. A device for thermally insulating a region of connection of connection end fittings (10) of two lagged underwater pipes (1) for offshore development of hydrocarbon deposits, at least one of which is a flexible pipe, each connection end fitting (10) including a front end flange (11) and a cylindrical cap (12) extending this flange (11), said flanges (11) of the connection end fittings (10) being capable of being connected with each other through connecting members (5), **characterized in that** it includes a thermally insulating sleeve (15) covering at least one portion of the length of each end fitting (10), adjacent to the end flange (11), while leaving said end flange (11) uncovered and a removable thermal-protection lid (20) covering the gap left between both thermally insulating sleeves (15) after connecting the end flanges (11) of both end fittings (10) through said connecting members (5), said removable lid (20) being attached on each thermally insulating sleeve (15).

2. The device according to claim 1, **characterized in that** the thermally insulating sleeve (15) extends over the whole length of the corresponding end fitting (10) while leaving the end flange (11) of said end fitting (10) uncovered.

3. The device according to claim 1, **characterized in that** the thermally insulating sleeve (15) extends over the whole length of the corresponding end fitting (10) while leaving uncovered, the end flange (11) of said end fitting (10) on the one hand and a groove (13) made on the cylindrical cap (12) of said end fitting (10) on the other hand.

4. The device according to any of claims 1 to 3, **characterized in that** the thermally insulating sleeve (15) is adhesively bonded on the corresponding connection end fitting (10).

5. The device according to any of claims 1 to 4, **characterized in that** the thermally insulating sleeve (15) is formed with two half-shells.

6. The device according to any of claims 1 to 3, **characterized in that** the thermally insulating sleeve (15) is formed by molding of a polyurethane foam or a syntactic foam.

7. The device according to any of claims 1 to 6, **characterized in that** the removable lid (20) includes on its internal face, a profile (21) mating the connecting members (5) for coating said connecting members (5).

8. The device according to any of claims 1 to 7, **characterized in that** the removable lid (20) is formed with two rigid half-shells (20a, 20b).

9. The device according to claim 8, **characterized in that** the junction region of both half-shells (20a, 20b) together has a transverse mating profile, for example in the shape of a bevel or of a tenon and mortise.

10. The device according to any of claims 1 to 7, **characterized in that** the removable lid (20) is formed with a turn (25) in a flexible material wound on the flanges of the end (11) of both end fittings (10) and on the connecting members (5).

11. The device according to any of claims 7 to 10, **characterized in that** the removable lid (20) includes, on each of its side edges, an annular tab (23) for covering a strip of the adjacent thermally insulating sleeve (15).

12. The device according to claim 11, **characterized in that** each annular tab (23) is attached on the thermally insulating sleeve (15) with a clamping ring (24).

13. The device according to any of claims 1 to 12, **characterized in that** the thermally insulating sleeve (15) of at least one connection end fitting (10) includes a draining channel (18) equipped with a valve (19) and comprising a first end opening onto the outside of the sleeve (15) and a second end opening inside this sleeve (15) at the flange end (11) of said connection end fitting (10).

14. A method for laying a device according to any of the preceding claims for thermally insulating a region of connection of connection end fittings (10) of two lagged underwater pipes, at least the one of which is a flexible pipe, **characterized in that** it consists in the following steps:
a) after mounting the connection end fitting (10) of the pipe (1) and before connecting both pipes (1) together, at least one portion of the length of each end fitting (10) and adjacent to the end flange (11) is covered with the thermally insulating sleeve (15) while leaving said flange (11) uncovered,
b) the end flanges (11) of both connection end fittings (10) are placed against each other,
c) said end flanges (11) are attached together with the connecting members (5),
d) after connecting the end flanges (11) of both pipes, the gap left between both thermally insulating sleeves (15) is covered with a removable thermal-protection lid (20), and
e) the removable lid (20) is connected with both thermally insulating sleeves (15).

15. The method according to claim 14, **characterized in that** it includes, after step (e), total immersion of the region of connection in water, notably in seawater.
